# EUROPEAN PATENT APPLICATION

(11) **EP 4 273 714 A1**
(43) Date of publication of application: **08.11.2023**
(21) Application number: 22171200.3
(22) Date of filing: 02.05.2022
(51) Int. Cl.: G06F 16/25, H04L 67/12

(54) **SYSTEM FOR ACCESSING PRODUCTION DATA**

(71) Applicant: BASF SE, 67056 Ludwigshafen am Rhein (DE)
(72) Inventor: Gau, Sebastian, 67056 Ludwigshafen am Rhein (DE)
(74) Representative: Eisenführ Speiser

(57) **Abstract**

The invention refers to a system (120) for accessing production data of production plants (130, 132, 134). The production data is stored on a plurality of databases (131, 133, 135).

An abstraction layer (121) is adapted to access each of the databases for retrieving production data from a database and for providing the retrieved data for further processing. A model interface (122) is adapted to run analytic workloads requiring production data from the databases, and is further adapted to cause the abstraction layer to retrieve the required predetermined production data from the databases and to provide the retrieved required predetermined production data to the analytic workload running on the model interface.

This allows for an access of production data of any type stored in a plurality of databases from anywhere and at any scale while requiring less computational resources.

## Description

### FIELD OF THE INVENTION

The invention relates to a system, a method and a computer program product for accessing production data of one or more production plants. Further, the invention relates to a user model interaction environment and a use of a system, method and computer program product for accessing production data.

### BACKGROUND OF THE INVENTION

In modern industrial production processes, a huge amount of production data, i.e. process data, is generated, for instance, comprising sensor measurements, control data, quality data, etc. Generally, the process data is stored locally on respective databases that are provided, for instance, at a specific production site. This huge amount of data comprises a lot of information that becomes in particular interesting when using current state of the art big data analysis tools. In particular, analysing these data could lead to a plurality of improvements in the context of production processes, for instance, leading to the reduction of resources, the streamlining of production processes, or the development of new advantageous production processes. However, accessing this theoretically available huge amount of data is often difficult. In many cases, for such analysis tools not only the data from one production site is necessary, but the production data of a plurality of production sites has to be accessed and processed which requires the access to all of the respective local storages containing the data. This leads in reality to a plurality of difficulties that often hinder that advantageous usage of the locally stored process data. It would just be advantageous if a solution would be provided that allows to access production data of any type from anywhere at any scale while requiring less computational resources.

### SUMMARY OF THE INVENTION

It is an object of the present invention to provide a system, a computer implemented method and a computer program product that allow for an access of production data of any type stored in a plurality of databases from anywhere and at any scale while requiring less computational resources.

In a first aspect of the present invention, a system for accessing production data of one or more production plants is presented, wherein the production data is stored on a plurality of databases wherein the system comprises a) an abstraction layer adapted to access each of the plurality of databases for retrieving production data from a respective database and for providing the retrieved data for further processing, and b) a model interface adapted to run analytic workloads requiring predetermined production data from the one or more of the plurality of databases, and further adapted to cause the abstraction layer to retrieve the required predetermined production data from one or more of the plurality of databases and to provide the retrieved required predetermined production data to the analytic workload running on the model interface.

Since the system provides an abstraction layer that is adapted to access each of the plurality of databases and a model interface adapted to run analytic workloads requiring the production data from the databases, only the abstraction layer accesses the databases directly, whereas any analytic workload is provided as part of the model interface. Thus, the analytic workloads can, via the abstraction layer, access from anywhere, i.e. from different network locations, the respective required production data. Moreover, the abstraction layer further allows to access the required production data while it is not necessary for the model interface, in particular, for an analytic workload running on the model interface, to be familiar with the type and/or scale of the required production data as stored on any storage. Thus, the analytic workload is enabled to access via the abstraction layer the required production data of any type from anywhere and at any scale. Moreover, since the required production data is only provided to the analytic workloads if needed, i.e. since the production data is not in general copied to some other location, for instance, in a cloud environment, the abstraction layer allows to save computational resources, in particular, storage resources. Furthermore, since the abstraction layer further allows to access the required production data while it is not necessary for the model interface, in particular, for an analytic workload running on the model interface, to be familiar with the type and/or scale of the required production data as stored on any storage, the data models, for instance, the data formats utilized by the model interface or analytic workloads can be harmonized. This decreases in particular the dependence on specific application programming interfaces. Further, the abstraction layer allows to utilize for the data retrieving more efficient protocols which increases the performance and efficiency, allows for a high data consistency and avoiding of latency during the data request.

Generally, the production data of one or more production plants can refer to any kind of data type or format and further can refer to any kind of content related to a production process of a production plant. In particular, the production data can refer to production time series data and/or production event data. Production time series data can refer to any series of time-dependent data values that are associated with a respective tag, for instance, with the respective sensor or control process. Preferably, the production time series data comprises time-dependent data values that refer to measurements of a sensor provided in the production plant for monitoring a production process of the production plant. Moreover, production time series data can also refer to control data utilized for monitoring and controlling production processes in the production plant. Production event data can refer to any data that is associated with a specific event. In particular, although the production event data can be generated at a specific time interval and can, within this time interval, be time-dependent, production event data does not necessarily include time-dependent data values. For example, production event data can refer to error data generated during a failure of a part of a production process, to service data generated during a maintenance action performed on one or more parts of the production plant, transition data generated during a transition of a production plant from one production to another production, etc. All of the respective generated production data are stored on a plurality of databases associated with the one or more production plants. For example, the production data can be stored continuously, at predetermined time intervals, or at least once in a while on one or more of the plurality of databases. Generally, the location of the plurality of databases can be anywhere as long as the respective databases are communicatively coupled with the respective production data generation layers of respective production plants. For example, the databases can refer to local databases provided as part of a local computing system of the production plant, for instance, as part of a controlling system of the production plant. However, the databases can also be part of a cloud environment or network that is communicatively coupled with the respective production data generation layer or controlling layer of a production plant such that the production data can be stored on the respective databases.

The system can generally be realized in form of any computational environment, in form of any combination of hard- and/or software. In particular, the system can be regarded as a computational framework providing the functions as described below. A respective computational framework can, for instance, be realized in form of communicatively coupled computational hardware and/or software that is structured into respective functional layers that provide the below described functions and are accessible, for example, by other functional layers of the computational framework. Preferably the computational framework is realized as a microservice-based computational framework. Generally, a microservice-based framework refers to a variant of a service-oriented architecture and arranges an application as a collection of loosely-coupled services. In a microservices architecture, i.e. framework, services are fine-grained and the protocols are lightweight.

The abstraction layer is adapted to access each of the plurality of databases for retrieving production data from a respective database and for providing the retrieved data for further processing. In particular, the abstraction layer is configured to provide a translation function translating commands, in this case, in particular, data requests, to specific database commands that allow the access of the respective requested data and the providing of the requested data via the abstraction layer. Preferably, the abstraction layer refers to a stateless and harmonizing programming interface. For example, the abstraction layer can be based on protocol buffers or gRPC remote procedure calls. It is further preferred that the abstraction layer is configured not only for harmonizing data models as utilized by the model interface, but also for the data discovery for the database systems, i.e. for finding out which data is available at all or browsing tree-like structures in the databases.

The model interface is adapted to run analytic workloads requiring predetermined production data from the one or more of the plurality of databases. In particular, analytic workloads refer to processes that allow for a processing, in particular, an analysing, of the required predetermined production data and providing of an output based on the processing. For example, an analytic workload can refer to a production data model utilizing the production data for predicting one or more outcomes in the context of production processes. Moreover, the respective analytical workload can also refer to an analysis of respective production data to determine respective production characteristics, for example, to determine a Co₂ generation during a production of a product, a specific material use during the production of a product, etc. Moreover, the analytic workload can also refer to an optimization model allowing to optimize a production process with respect to one or more production parameters based on the required production data. The model interface is in particular adapted to cause the abstraction layer to retrieve the required predetermined production data from one or more of the plurality of the databases and to provide the retrieved required predetermined production data to the analytic workload running on the model interface. Thus, the model interface acts as interface between the analytic workloads and the abstraction layer and thus provides further possibilities of harmonization in the access of the plurality of databases. For example, the model interface can allow for a transformation of data formats and request formats provided and/or required by an analytical workload into other formats that are required by the abstraction layer and or be one or more of the storages. Preferably, the model interface is realized as a gRPC service contract between the abstraction layer and a respective analytic workload.

In an embodiment, the abstraction layer further comprises a mapping layer comprising a mapping of production data locations on the plurality of databases to production data identifications utilized by the model interface for indicating the required predetermined production data to the abstraction layer, wherein the abstraction layer is adapted to utilize the mapping for retrieving the required predetermined production data. The mapping can be provided in any form of data structure that allows to associate a production data location with the production data identification utilized by the model interface. For example, the mapping can refer to a lookup table, a functional relation or more complex structural relations. Utilizing such a mapping allows for a harmonizing of the production data access independent of production data formats or identifications utilized, for instance, by a respective production plant or a database on which the respective production data is stored. In particular, the analytic workloads only have to provide indicators that indicate to the model interface which production data identifications are required by a respective analytical workload, wherein due to the mapping it is not necessary for an analytical workload or a user of an analytical workload to know the specific locations and/or data formats of the required production data. Thus, the accessing of respective predetermined production data becomes easier to implement.

In an embodiment, the abstraction layer comprises a harmonization model, wherein the harmonization model is adapted such that requests and responses are based on programming analytic workloads which are harmonized across the plurality of databases. The harmonization model can refer to any model that allows to utilize for requests and responses to and from the analytic layer the same data format and/or data structure. Accordingly, the analytic workloads can be programmed respectively to utilize the harmonized requests and responses. The harmonization model can then be adapted to translate the harmonized requests and responses into formats and data types as necessary by a respective database. For example, the harmonization model can utilize respective mappings, for example, lookup tables or functional relations for transforming the harmonized requests and responses to respective requests to and responses of an actual database. However, the harmonization model can also utilize predetermined rules for a translation of the harmonized requests and responses. In particular, if a data format for requests and responses of a specific database requires more information than provided by the harmonized requests and responses, the rules can determine how this missing information is provided, for instance, by utilizing predetermined values or by requesting the respective information from a user. Utilizing a respective harmonization model thus allows for a further independence of the programming of the analytic workloads from the specific requirements of the plurality of databases.

In an embodiment, the analytic workloads can refer to active or passive analytic workloads, wherein active analytic workloads are adapted to run automatically on the model interface when not instructed otherwise and passive analytic workloads are explicitly invoked by an external invocation service to run on the model interface by an external command. Generally, an active analytic workload can be configured to automatically run at predetermined time intervals and is preferably realized as a cronjob. In this context an external invocation service refers to a service that is not part of the analytic workload itself but lies outside, i.e. external, to the analytic workload itself.

Preferably, the system further comprises a model management unit communicatively coupled with the invocation service, wherein the model management unit is adapted to manage the invocation of the passive analytic workloads on the model interface by causing the invocation service to invoke an analytic workload based in predetermined rules. Respective predetermined rules for the invocation of an analytic workload can be provided to the management unit, for instance, associated with each respective passive model. The respective rules can refer to simple rules, for instance, indicating an invocation of the passive model as specific time intervals, like each hour, each day or each week. However, the predetermined rules can also be more complex rules that indicate, for instance, the invocation of a passive model depending on predetermined events. Such events can refer, for instance, to external events like specific user input or to internal events, for instance, to the invocation of another passive model. Moreover, it is preferred that the model management unit is configured to allow for an registration, updating, viewing and deleting of analytic workloads, in particular, also active analytic workloads.

Generally, providing a computational framework for active analytic workloads and passive analytic workloads as described above allows for a very effective utilization of respective computational resources. For example, it is not necessary that a plurality of passive analytic workloads that should only run at predetermined times are kept running on the interface layer all the time in order to fulfil a predetermined function. In fact, only the optional management unit has to utilize computational resources all the time in order to communicatively couple to the invocation service, whereas the respective passive analytical workloads are not run until explicitly invoked.

In an embodiment, the analytic workloads are hosted container-based. In particular, the container-based hosting provides a runtime environment for the analytical workloads that is encapsulated as immutable infrastructure, and consequently allows the use of many popular programming languages since the only dependency is a linux kernel. Moreover, a containerization allows for an easier access and management of the respective analytical workloads. Preferably, the analytic workloads are containerized by running analytic workloads that have the same data scheduling within the same container environment. Containerizing analytical workloads that have the same data scheduling in the same container environment allows for an even easier and less computational resource intensive management of the production data transfer from the databases to the analytic workloads.

In an embodiment, the abstraction layer comprises an access management layer adapted to manage a user access to one or more of the plurality of databases such that for each of the one or more databases to which a user has access an access token for the user is generated allowing for the access to the respective database. In particular, it is preferred that the access management layer is adapted to verify a user access data, like a user name and a password, for a specific database, for instance, by verifying the user access data with the access management of the respective database. The access management layer than generates the access token based on the verified user access data and manages the access of the user to the respective database via the access token. Moreover, it is preferred that the access management layer is non-persistent, i.e. does not store the user access data persistently in any way. This has the advantage that the security for accessing the databases can be strongly increased, in particular, with respect to legacy database system with outdated security management. In this context, an access token refers to a computational object that encapsulates a security identity for a process, in this case, in particular, of a data access process. The access token can indicate, for instance, an identity of a user, information on a user's group, information on a user's privileges or information on a specific data processing. Providing such an access token for a user for each of the one or more databases to which a user has generally access thus allows to increase the security of the access and ensures that only users with valid security credentials have access to the potentially sensitive production data. Preferably, the abstraction layer is adapted to provide a supertoken for a user for providing access to the access management layer, wherein the supertoken is encrypted and comprises all access tokens of the user and allows for a centralized access to the respective databases. In particular, it is preferred that the supertoken refers to a wrapper for the various kinds of access tokens of the user on the respective database level. Moreover, it is preferred that the generated supertoken is encrypted prior to being provided to a user or a user client such that it is completely opaque to outside access. Using such a supertoken allows to increase the security also of already existing security systems, for instance, of already existing security systems of one or more of the databases, due to the additional layer of verification. For example, in some cases the databases refer to legacy systems that do not provide the same level of security as current database systems. In particular, in these cases the supertoken allows to add a further layer of security that provides the current security requirements and thus strongly increases the security also for the legacy databases. Moreover, it is preferred that all tokens or supertokens are generated with an expiry date, after which they are not valid anymore and a new token or supertoken has to be requested. This has the further advantage that unauthorized access based on a stolen token or supertoken is strongly time limited and the level of security can be adapted easily, for example, by adapting the time period for which a token or supertoken is valid.

In an embodiment, the abstraction layer is adapted for a parallel access of two or more of the plurality of databases for retrieving production data parallel from the at least two respective databases. This allows for an optimized access to the plurality of databases and retrieving of the production data. Moreover, it is preferred that the abstraction layer is configured to utilized performant tables for accessing the production data in the respective databases allowing for an increase in performance.

In an embodiment, the abstraction layer is adapted to translate legacy communication protocols of a database to up-to-date communication protocols for communication with the respective database.

In a further aspect of the invention, a user model interaction environment is presented, wherein the environment comprises, a user interface allowing a user to access the model interface of a system as described in any of the preceding claims for providing, adapting and/or controlling one or more analytic workloads. Optionally the user model interaction environment comprises also a system as described in any of the preceding claims.

In a further aspect, a user model interaction method is presented, wherein the method comprises, providing a user interface allowing a user to access the model interface of a system as described in any of the preceding claims for providing, adapting and/or controlling one or more analytic workloads.

In a further aspect of the invention, a method for accessing production data of one or more production plants is presented, wherein the production data is stored on a plurality of databases, wherein the method comprises a) providing an abstraction layer adapted to access each of the plurality of databases for retrieving production data from a respective database and for providing the retrieved data for further processing, b) providing a model interface adapted to run analytic workloads requiring predetermined production data from the one or more of the plurality of databases, and c) causing, via the model interface, the abstraction layer to retrieve the required predetermined production data from one or more of the plurality of databases and to provide the retrieved required predetermined production data to the analytic workload running on the model interface.

In a further aspect of the invention, a computer program product for accessing production data of one or more production plants is presented, wherein the computer program product is adapted to cause a system as described above to carry out a method as described above.

In a further aspect of the invention, a use of at least one of a system as described above, a method as described above, and a computer program product as described above for retrieving processing production data of one or more production plants is presented, in particular, for compound optimization.

It shall be understood that the system as described above, the method as described above, and the computer program product as described above have similar and/or identical preferred embodiments, in particular, as defined in the dependent claims.

It shall be understood that a preferred embodiment of the present invention can also be any combination of the dependent claims or above embodiments with the respective independent claim.

These and other aspects of the present invention will be apparent from and elucidated with reference to the embodiments described hereinafter.

### BRIEF DESCRIPTION OF THE DRAWINGS

In the following drawings:
- Fig. 1: shows schematically and exemplarily a user model interaction environment comprising a system for accessing production data of one or more production plants,
- Fig. 2: shows a flow chart exemplarily illustrating an embodiment of a method for accessing production data of one or more production plants, and
- Figs. 3 to 7: show schematically and exemplarily more detailed embodiments of the system for accessing production data of one or more production plants.

### DETAILED DESCRIPTION OF EMBODIMENTS

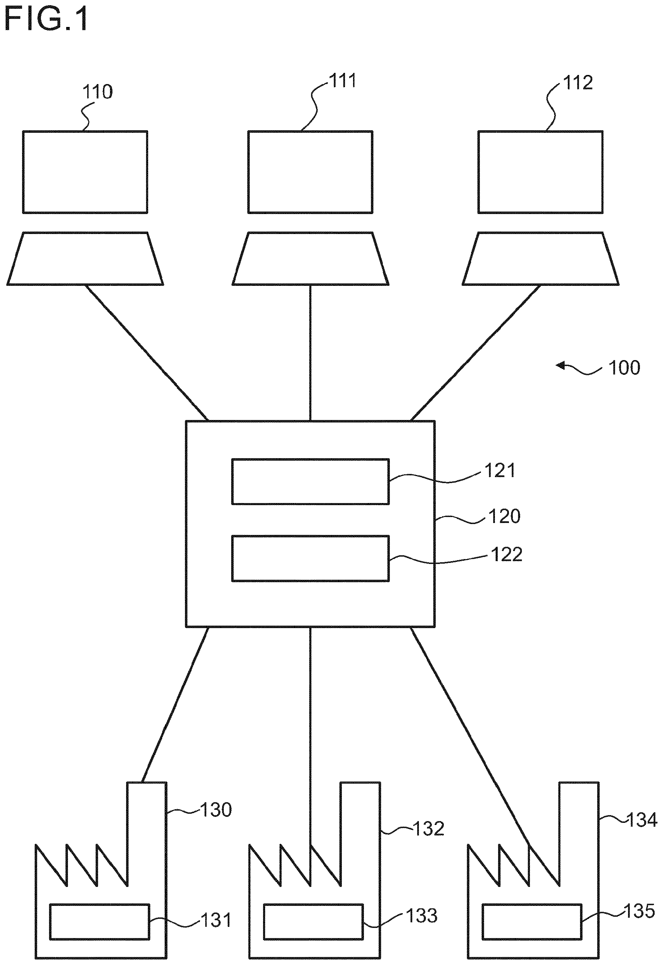

Fig. 1 shows schematically and exemplarily a user model interaction environment 100 comprising in this example a plurality of user interfaces 110, 111, 112 and a system 120 for accessing production data of one or more production plants 130, 132, 134. In particular, the production plants 130, 132, 134 store production data on one or more databases 131, 133, 135 that can optionally also be regarded as part of the user interaction environment 100.

Generally, the industrial plants 130, 132, 134 can refer to any technical infrastructure that is used for an industrial purpose. An industrial purpose may be manufacturing or processing of one or more industrial products, i.e., a manufacturing process or a processing performed by the industrial plant. For example, the industrial purpose can refer to the production of a product. The product can, for example, be any physical product such as a chemical, a biological, a pharmaceutical, a food, a beverage, a textile, a metal, a plastic, or a semiconductor. Additionally or alternatively, the product can even be a service product such as an electricity, heating, air conditioning, waste treatment such as recycling, chemical treatment such as breakdown or dissolution, or even incineration, etc. Accordingly, the industrial plants 130, 132, 134 may refer to one or more of a chemical plant, a process plant, a pharmaceutical plant, a fossil fuel processing facility such as an oil and/or natural gas valve, a refinery, a petrochemical plant, a cracking plant, and the like. The industrial plants 130, 132, 134 can even refer to any of a distillery, an incinerator, or a power plant. The industrial plants 130, 132, 134 can even refer to a combination of any of the examples given above.

For performing a production process, the industrial plants 130, 132, 134 comprise a technical infrastructure which can be controlled by control parameters implemented, for instance, by a process control system into the technical infrastructure. The technical infrastructure may comprise equipment or process units such as any one or more of a heat exchanger, a column such as a fractionating column, a furnace, a reaction chamber, a cracking unit, a storage tank, a precipitator, a pipeline, a stack, a filter, a valve, an actuator, a transformer, a circuit breaker, a machinery, e.g., a heavy duty rotating equipment such as a turbine, a generator, a pulveriser, a compressor, a fan, a pump, a motor, etc. Moreover, the industrial plants 130, 132, 134 typically comprises a plurality of sensors that allow to measure operational parameters of the technical infrastructure. The measured operational parameters can then be stored referring to or as part of the production data by the process control system on a respective database 131, 133, 135 which can also be regarded as a process database system of the industrial plants 130, 132, 134. Further, the operational parameters can also be utilized by the process control system for controlling the production process in the industrial plants 130, 132, 134. The operational parameters measured by the sensors may relate to various process parameters and/or parameters related to the equipment or the process units. For example, sensors may be used for measuring a process parameter such as a flow rate within a pipeline, a fluid level in a tank, a temperature of a furnace, a chemical composition of a gas, etc., and some sensors can be used for measuring vibrations of a turbine, a speed of a fan, an opening of a valve, a corrosion of a pipeline, a voltage across a transformer, etc. The difference between the sensors cannot only be based on the parameter that they sense but can also be based on the sensing principle that the respective sensors use. Some examples of sensors based on the parameter that they sense may comprise: temperature sensors, pressure sensors, radiation sensors such as light sensors, flow sensors, vibration sensors, displacement sensors and chemical sensors such as those for detecting a specific matter such as a gas. Examples of sensors that differ in terms of the sensing principle that they employ may, for example, be: piezoelectric sensors, piezoresistive sensors, thermocouples, impedance sensors such as capacitive sensors and resistive sensors, and so forth. The sensors generally measure operational parameters in form of time-dependent data values, i.e. data values that are associated with the specific time at which they have been measured by the sensor. It is common to store these time-dependent data values measured by a sensor in form of a time-series data set on a database 131, 133, 135.

Moreover, in addition to the operation parameters measured in form of a time-series data set, also event based operation data can be determined, for example, by a sensor of more generally by the process control system and stored on a database 131, 133, 135. Event based operation data refers to operation data that is associated with a specific event, for example, with a malfunction of a part of the technical equipment of an industrial plant 130, 132, 134. This data can be provided in any format that is suitable for the respective event, for instance, can refer to an error code or process protocol for a specific timeframe. Also such event based operation data can refer to or be part of the production data. The databases 131, 133, 135 can refer, for instance, to storages comprising dedicated hardware and/or software for storing the production data. However, the databases 131, 133, 135 can also refer to general storages or to any other computing system that, *inter alia,* allows a storage of production data.

Generally, the industrial plants 130, 132, 134 can be integrated into an enterprise control system for managing and controlling a production performed by the industrial plants 130, 132, 134. For managing and controlling of the industrial plants 130, 132, 134, it is often desirable to retrieve production data from the databases 131, 133, 135 and to utilize the retrieved production data in analytic workloads that can be adapted not only for analysing but also for providing control signals for controlling a production process in an industrial plant 130, 132, 134. In particular, the analytic workloads can refer to or be part of a dedicated and more complex management and controlling system, like an enterprise control system. In particular, in many real applications, the computational framework managing, controlling and retrieving of the production data on the databases 131, 133, 135 refer to legacy systems that are not adapted for more complex processing and analysing of the respective data.

For accessing the databases 131, 133, 135 to retrieve production data, the user model interaction environment 100 comprises a system 120 for accessing the production data on the plurality of databases 131, 133, 135. The system 120 can be realized, for instance, in form of a computational framework in a cloud- or server-based computational architecture. However, the system 120 can also be realized as any kind of hardware and/or software that provides the functions as described below. In particular, the system 120 comprises an abstraction layer 121 that is configured to access each of the plurality of databases 131, 133, 135 for retrieving production data from the respective database and further for providing the retrieved data for further processing. In particular, the abstraction layer is provided with all necessary communication protocols that allow the abstraction layer to access the respective databases 131, 133, 135, wherein any layer or program interacting with the abstraction layer for retrieving production data from one of the databases 131, 133, 135 can do so without any knowledge or information on the respective specific protocols that are used by the respective database 131, 133, 135.

Further, the system comprises a model interface 122 that is adapted to run analytic workloads requiring predetermined production data from the one or more of the plurality of databases 131, 133, 135. The analytic workloads can refer to any kind of program or analysis tool that utilizes stored production data from one or more of the production plants 130, 132, 134. For example, analytic workload can refer to a model allowing for the calculation of generated CO₂ during the production of a product in one or more of the production plants 130, 132, 134. The model interface is adapted to cause the abstraction layer to retrieve the required predetermined production data for the analytic workloads from one or more of the plurality of databases 131, 133, 135 and to provide the retrieved required predetermined production data to the respective analytic workloads running on the model interface. Thus, the model interface can act as a runtime environment for the one or more analytic workloads and further as an interface for the analytic workloads with the abstraction layer. A user or another system can then utilize the user interfaces 110, 111, 112 to access the model interface 122, in particular, for providing, adapting and/or controlling one or more of the analytic workloads. For example, a user can utilize user interface 112 to upload to the model interface 122 a new analytic workload. Moreover, a user can also utilize a user interface like user interface 112 for updating or otherwise adapting one of the analytic workloads running on the model interface 122. Further, results of the analytic workloads, for instance, analytic results or model predictions, can also be provided from the analytic workloads running on the model interface 122 to one or more of the user interfaces 110, 111, 112 such that they can be provided to a user or to a further processing system.

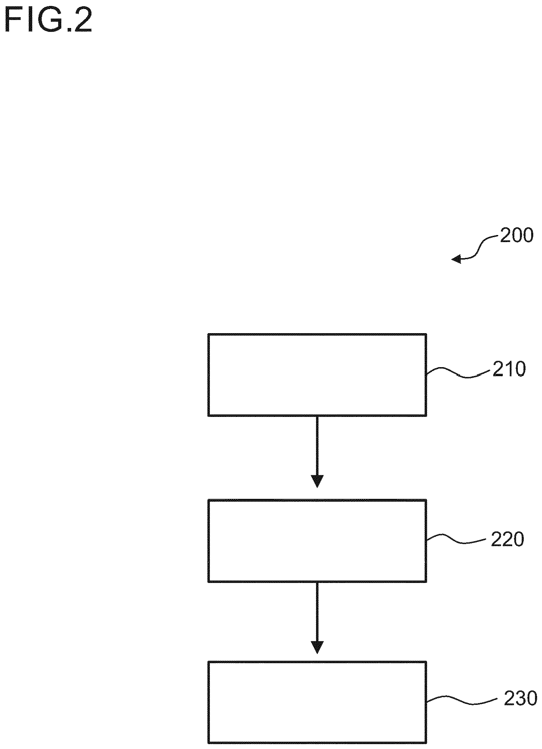

Fig. 2 shows schematically and exemplarily a method 200 for accessing production data of one or more production plants, wherein the method can be performed as computer implemented method, for example, by a system or parts of the system of Fig. 1. The method comprises in step 210 the providing of an abstraction layer adapted to access each of a plurality of databases for retrieving production data from a respective database and for providing the retrieved data for further processing. Further, the method comprises in step 220 providing a model interface adapted to run analytic workloads requiring predetermined production data from the one or more of the plurality of databases. In step 230, the method comprises causing, in particular, via the model interface, the abstraction layer to retrieve the required predetermined production data from one or more of the plurality of databases and to provide the retrieved required predetermined production data to the analytic workload running on the model interface.

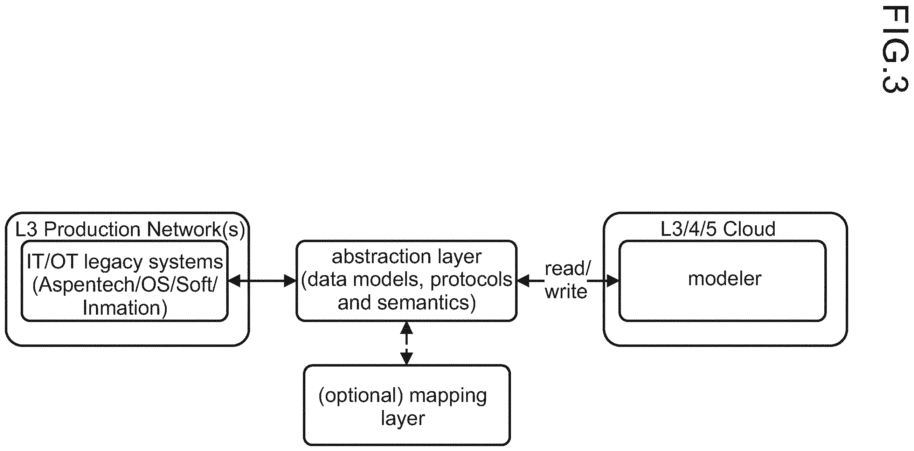

Further details of preferred embodiments of the system for accessing production data will be described in the following. Generally, the invention refer to the idea of 'enablement by abstraction' leading to the idea of giving modelers access to legacy source systems, for example, databases, without them really noticing that they still use these systems. This can be achieved, according to the invention described above, by providing an abstraction layer between the modelers and the legacy systems. A schematic drawing of an exemplary framework of this principle of the invention is shown in Fig 3. In how far the legacy systems are abstracted can be implicated by a set of features of the abstraction layer and decides about how 'thick' the abstraction layer is. For example, the abstraction layer can be configured to provide a single endpoint for accessing the production data in all systems, in particular, databases, behind the layer, reducing the amount of endpoints that modelers have to use. Further, by providing a model interface the data models, e.g. analytical workloads, facing the data consumers can also be provided as harmonized as possible, especially with respect to the production data. Furthermore, it is preferred that the abstraction layer utilized a mapping layer. Generally, different systems use different data formats with different data identification formats and different semantics, e.g. meaning of field names. Utilizing a mapping layer allows in such cases for a harmonization of these data formats. In particular, the mapping layer is configured to contain mappings between identifiers in front of and behind the abstraction layer. The data in the mapping layer can be maintained by a modeler and thus enables 100% abstraction of backend source systems, even on an identification level.

The invention has thus the advantage that, since no replication between systems is necessary, data consumers by design always get the 'freshest' version of the production data. Further, since no additional stateful backend for storing the data is necessary, there are massively reduced infrastructure requirements, and a lower cost of ownership is a direct consequence, if, for example, as described above a thick, stateful mapping layer is utilized. Moreover, instead of having to tolerate the load of continuous data transfers, for instance, to a central or cloud database, the databases and associated systems have to tolerate the load of the model queries. For systems which do not contain much data of interest for modelers, this decreases, in particular, unnecessary loads strongly.

Generally, providing the abstraction layer allows abstraction application programming interface (API) consumers to have minimum dependency on legacy systems on protocol and semantic level. Moreover, an abstraction layer API can be easily extended. Further, legacy systems can be migrated with minimum impact on data consumers, failover strategies can be implemented. The abstraction layer can further be configured to optimize requests to reduce load on legacy systems. A further advantage, in particular, of embodiments in which the system is realized as microservice-based gRPC framework, is that all microservices on a respective compute cluster, for instance, forming the abstraction layer, can be configured to share a common, programming language independent data model. For example, a provided transpiler of the gRPC framework can be utilized to translate predefined data models into other programming languages. This allows the provided model interface and/or the analytic workloads to be implemented in all modern programming languages.

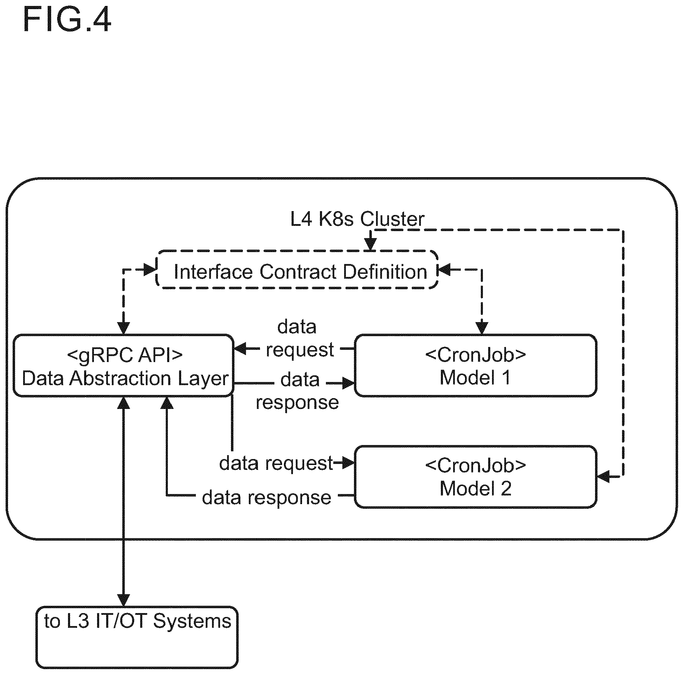

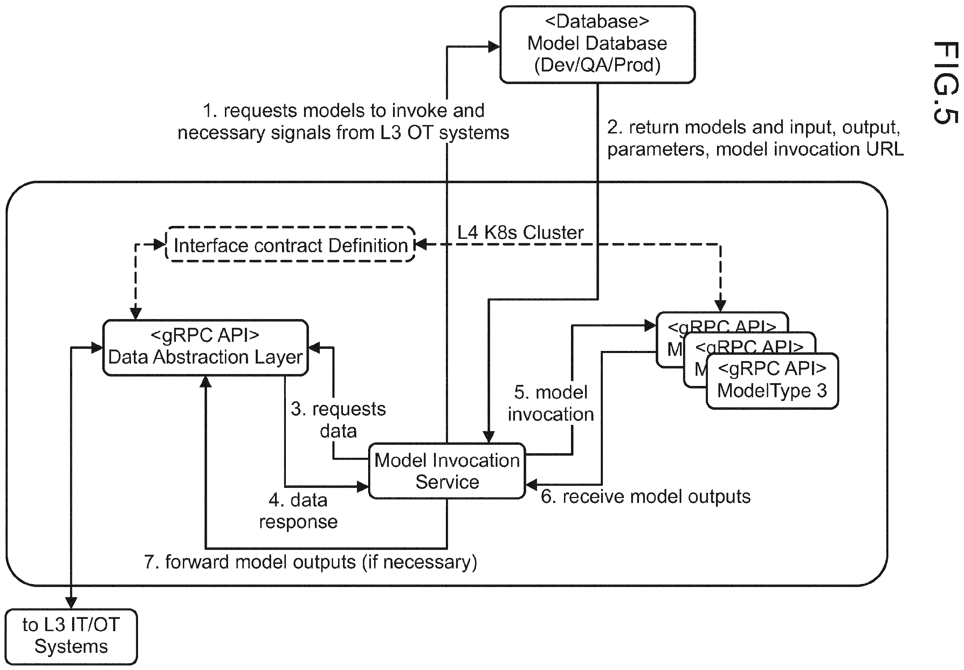

In a preferred embodiment, the model interface is configured to distinguish between so-called 'active' models, in particular, models which wake up on their own and are invoked cycle-based per CRON job, and so-called 'passive' models that have to be invoked via external invocation. For passive models one model type can refer to an application programming interface and an external service can be provided to invoke the model with appropriate data. Preferably, inputs, outputs and parameters for this model will be persisted. A schematic drawing of an exemplary computational framework in which the passive and active analytic workloads, e.g. models, can be provided and run according to the invention is shown in Figs. 4 and 5, respectively.

For active models it is preferred that there is one model per container, which removes the necessity to maintain inputs, outputs and parameters of models in an external system. Instead of dedicated containers per models, there can also be dedicated containers started by the CRON-job, which run all models for this interval in sequence, e.g. one container for hourly models, one for daily models, one for weekly models.

For some use cases, even passive models can be little bit too heavy weight. Especially for model types which are used only by a very small number of models, hosting a whole container can be a little bit too resource consuming. In this case it is preferred that the model interface is configured to provide a further subclass of passive models called "script-based models". These subclass can be realized as python scripts that can be persisted in the database and invoked directly utilizing the invocation service.

Since passive models have to be invoked externally, preferably some external software component ensures that every model is invoked according to the configured cycle time, knows which models exist and which models need which data, and under which endpoint it is running. Preferably, for this task a model management unit is provided that is configured accordingly and communicates with the invocation services for invoking respective models.

Generally, the abstraction layer providing a production data interface with the databases is of special relevance in terms of security, since it is the central point of access for reading and writing data from and to respective databases. In a preferred embodiment, the abstraction layer comprises an additional access control layer based on an external source of trust, e.g. Azure AD, that assigns the abstraction layer itself full access rights to underlying database systems. In this case it is in a respective analytical workloads and access control layers responsibility to authenticate and authorize users accordingly. Consequently, additional users and groups need to be created and maintained. In this embodiment, already existing (on-prem AD) user tokens and functional accounts on the database systems themselves cannot be used. This can decrease an adoptability of a respective analytical workload. However, the massive advantage is that all best practices in terms of security can be easily implemented by the access control layer.

In another preferred embodiment, existing authentication and authorization mechanisms, for example, user tokens, are reused, e.g. by passing through the credentials of the analytical workload user. The analytical workload itself therefore does not have to provide any access rights. Further, no additional access control layers needs to be maintained, but as a downside of this approach, the system is based on multiple authorities than can potentially serve as trusted authorities to authenticate the user. Additionally, the abstraction layer has to support and securely wrap some outdated legacy authentication mechanisms.

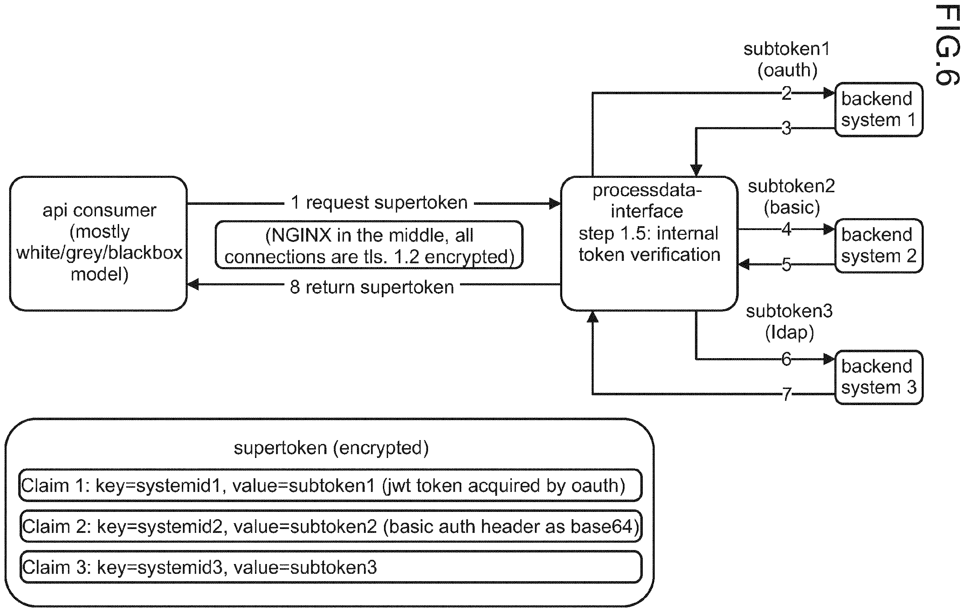

Preferably, a supertoken which wraps multiple subtokens used to authenticate against a respective database system, for instance, of legacy systems, is utilized. A schematic drawing of an exemplary computational framework and content of a supertoken according to the invention is shown in Fig 6. The subtokens are contained as part of the supertoken. In particular, it is preferred that a unique backend system, in particular, database, identifier is provided as part of the supertoken, wherein the value of the identifier refers to the token which grants access to the associated backend system. Consequently, there are multiple reasons to acquire or refresh a supertoken, for example, a token expired in the abstraction layer or a token expired in one of the backend systems. In both cases, a fresh supertoken can be generated for a user comprising fresh subtokens for all backend systems.

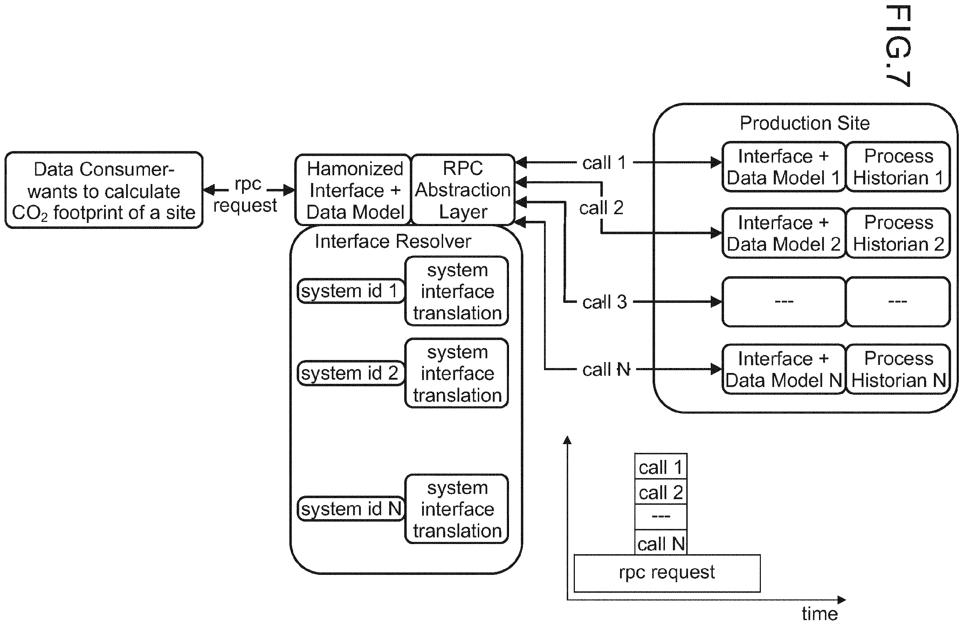

An exemplary detailed example for an application of the invention is shown in Fig. 7. In this example, a data consumer wants to compute a CO₂ footprint of a whole production site, wherein the production site contains multiple distributed production data databases, e.g. historians, which contain the necessary production data to compute the footprint. Generally, every database system can have a differing data model and interface. Thus, to compute the CO₂ footprint of a production site it has to be dealt with every single of these different database system requirements. Providing an abstraction layer as described in detail above strongly improves this situation. In particular, it is preferred that the abstraction layer is configured to accept an aggregated request for the multiple database systems and to distribute the requests among multiple database systems, e.g. backend source historians, in a parallel fashion. Moreover, it is preferred that the abstraction layer is adapted, as soon as the database systems respond, to translated all responses into a common, shared data model. From data consumers, e.g. analytic workload, point of view, the data looks exactly the same no matter from which source systems it originates. Thus, this massively simplifies creating analytics on-top of this data.

Other variations to the disclosed embodiments can be understood and effected by those skilled in the art in practicing the claimed invention, from a study of the drawings, the disclosure, and the appended claims.

For the processes and methods disclosed herein, the operations performed in the processes and methods may be implemented in differing order. Furthermore, the outlined operations are only provided as examples, and some of the operations may be optional, combined into fewer steps and operations, supplemented with further operations, or expanded into additional operations without detracting from the essence of the disclosed embodiments.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Procedures like the providing of an abstraction layer of a model interface, etc. performed by one or several units or devices can be performed by any other number of units or devices. These procedures can be implemented as program code means of a computer program and/or as dedicated hardware.

A computer program product may be stored/distributed on a suitable medium, such as an optical storage medium or a solid-state medium, supplied together with or as part of other hardware, but may also be distributed in other forms, such as via the Internet or other wired or wireless telecommunication systems.

Any units described herein may be processing units that are part of a classical computing system. Processing units may include a general-purpose processor and may also include a field programmable gate array (FPGA), an application specific integrated circuit (ASIC), or any other specialized circuit. Any memory may be a physical system memory, which may be volatile, non-volatile, or some combination of the two. The term "memory" may include any computer-readable storage media such as a non-volatile mass storage. If the computing system is distributed, the processing and/or memory capability may be distributed as well. The computing system may include multiple structures as "executable components". The term "executable component" is a structure well understood in the field of computing as being a structure that can be software, hardware, or a combination thereof. For instance, when implemented in software, one of ordinary skill in the art would understand that the structure of an executable component may include software objects, routines, methods, and so forth, that may be executed on the computing system. This may include both an executable component in the heap of a computing system, or on computer-readable storage media. The structure of the executable component may exist on a computer-readable medium such that, when interpreted by one or more processors of a computing system, e.g., by a processor thread, the computing system is caused to perform a function. Such structure may be computer readable directly by the processors, for instance, as is the case if the executable component were binary, or it may be structured to be interpretable and/or compiled, for instance, whether in a single stage or in multiple stages, so as to generate such binary that is directly interpretable by the processors. In other instances, structures may be hard coded or hard wired logic gates, that are implemented exclusively or near-exclusively in hardware, such as within a field programmable gate array (FPGA), an application specific integrated circuit (ASIC), or any other specialized circuit. Accordingly, the term "executable component" is a term for a structure that is well understood by those of ordinary skill in the art of computing, whether implemented in software, hardware, or a combination. Any embodiments herein are described with reference to acts that are performed by one or more processing units of the computing system. If such acts are implemented in software, one or more processors direct the operation of the computing system in response to having executed computer-executable instructions that constitute an executable component. Computing system may also contain communication channels that allow the computing system to communicate with other computing systems over, for example, network. A "network" is defined as one or more data links that enable the transport of electronic data between computing systems and/or modules and/or other electronic devices. When information is transferred or provided over a network or another communications connection, for example, either hardwired, wireless, or a combination of hardwired or wireless, to a computing system, the computing system properly views the connection as a transmission medium. Transmission media can include a network and/or data links which can be used to carry desired program code means in the form of computer-executable instructions or data structures and which can be accessed by a general-purpose or special-purpose computing system or combinations. While not all computing systems require a user interface, in some embodiments, the computing system includes a user interface system for use in interfacing with a user. User interfaces act as input or output mechanism to users for instance via displays.

Those skilled in the art will appreciate that at least parts of the invention may be practiced in network computing environments with many types of computing system configurations, including, personal computers, desktop computers, laptop computers, message processors, hand-held devices, multi-processor systems, microprocessor-based or programmable consumer electronics, network PCs, minicomputers, mainframe computers, mobile telephones, PDAs, pagers, routers, switches, datacenters, wearables, such as glasses, and the like. The invention may also be practiced in distributed system environments where local and remote computing system, which are linked, for example, either by hardwired data links, wireless data links, or by a combination of hardwired and wireless data links, through a network, both perform tasks. In a distributed system environment, program modules may be located in both local and remote memory storage devices.

Those skilled in the art will also appreciate that at least parts of the invention may be practiced in a cloud computing environment. Cloud computing environments may be distributed, although this is not required. When distributed, cloud computing environments may be distributed internationally within an organization and/or have components possessed across multiple organizations. In this description and the following claims, "cloud computing" is defined as a model for enabling on-demand network access to a shared pool of configurable computing resources, e.g., networks, servers, storage, applications, and services. The definition of "cloud computing" is not limited to any of the other numerous advantages that can be obtained from such a model when deployed. The computing systems of the figures include various components or functional blocks that may implement the various embodiments disclosed herein as explained. The various components or functional blocks may be implemented on a local computing system or may be implemented on a distributed computing system that includes elements resident in the cloud or that implement aspects of cloud computing. The various components or functional blocks may be implemented as software, hardware, or a combination of software and hardware. The computing systems shown in the figures may include more or less than the components illustrated in the figures and some of the components may be combined as circumstances warrant.

Any reference signs in the claims should not be construed as limiting the scope.

The invention refers to a system for accessing production data of production plants. The production data is stored on a plurality of databases. An abstraction layer is adapted to access each of the databases for retrieving production data from a database and for providing the retrieved data for further processing. A model interface is adapted to run analytic workloads requiring production data from the databases, and is further adapted to cause the abstraction layer to retrieve the required predetermined production data from the databases and to provide the retrieved required predetermined production data to the analytic workload running on the model interface. This allows for an access of production data of any type stored in a plurality of databases from anywhere and at any scale while requiring less computational resources.

## Claims

1. A system for accessing production data of one or more production plants (130, 132, 134), wherein the production data is stored on a plurality of databases (131, 133, 135), wherein the system (120) comprises:
an abstraction layer (121) adapted to access each of the plurality of databases (131, 133, 135) for retrieving production data from a respective database and for providing the retrieved data for further processing, and
a model interface (122) adapted to run analytic workloads requiring predetermined production data from the one or more of the plurality of databases (131, 133, 135), and further adapted to cause the abstraction layer (121) to retrieve the required predetermined production data from one or more of the plurality of databases (131, 133, 135) and to provide the retrieved required predetermined production data to the analytic workload running on the model interface.

2. The system according to claim 1, wherein the abstraction layer (121) further comprises a mapping layer comprising a mapping of production data locations on the plurality of databases (131, 133, 135) to production data identifications utilized by the model interface (122) for indicating the required predetermined production data to the abstraction layer (121), wherein the abstraction layer (121) is adapted to utilize the mapping for retrieving the required predetermined production data.

3. The system according to any of claims 1 and 2, wherein the abstraction layer (121) comprises a harmonization model, wherein the harmonization model is adapted such that requests and responses are based on programming analytic workloads which are harmonized across the plurality of databases (131, 133, 135).

4. The system according to any of the preceding claims, wherein the analytic workloads can refer to active or passive analytic workloads, wherein active analytic workloads are adapted to run automatically on the model interface (122) when not instructed otherwise and passive analytic workloads are explicitly invoked by an external invocation service to run on the model interface (122) by an external command.

5. The system according to claim 4, wherein the system further comprises a model management unit communicatively coupled with the invocation service, wherein the model management unit is adapted to manage the invocation of the passive analytic workloads on the model interface (122) by causing the invocation service to invoke an analytic workload based in predetermined rules.

6. The system according to any of the preceding claims, wherein the analytic workloads are hosted container-based.

7. The system according to claim 6, wherein the analytic workloads are containerized by running analytic workloads that have the same data scheduling within the same container environment.

8. The system according to any of the preceding claims, wherein the abstraction layer (121) comprises an access management layer adapted to manage a user access to one or more of the plurality of databases (131, 133, 135) such that for each of the one or more database to which a user has access an access token for the user is generated allowing for the access to the respective database.

9. The system according to claim 8, wherein the abstraction layer (121) is adapted to provide a supertoken for a user for providing access to the access management layer, wherein the supertoken is encrypted and comprises all access tokens of the user and allows for a centralized access to the respective databases (131, 133, 135).

10. A user model interaction environment, wherein the environment comprises:
a user interface allowing a user to access the model interface (122) of a system as described in any of the preceding claims for providing, adapting and/or controlling one or more analytic workloads.

11. A method for accessing production data of one or more production plants (130, 132, 134), wherein the production data is stored on a plurality of databases (131, 133, 135), wherein the method (200) comprises:
providing (210) an abstraction layer (121) adapted to access each of the plurality of databases (131, 133, 135) for retrieving production data from a respective database and for providing the retrieved data for further processing,
providing (220) a model interface (122) adapted to run analytic workloads requiring predetermined production data from the one or more of the plurality of databases (131, 133, 135), and
causing (230), via the model interface (122), the abstraction layer (121) to retrieve the required predetermined production data from one or more of the plurality of databases (131, 133, 135) and to provide the retrieved required predetermined production data to the analytic workload running on the model interface (122).

12. A computer program product for accessing production data of one or more production plants (130, 132, 134), wherein the computer program product is adapted to cause a system according to claim 1 to carry out a method according to claim 11.

13. Use of at least one of a system according to any of claims 1 to 9, a method according to claim 11, and a computer program product according to claim 12 for retrieving processing production data of one or more production plants (130, 132, 134), in particular, for compound optimization.
